# EUROPÄISCHE PATENTANMELDUNG

(11) **EP 1 010 581 A2**
(43) Veröffentlichungstag der Anmeldung: **21.06.2000**
(21) Anmeldenummer: 99124836.0
(22) Anmeldetag: 15.12.1999
(51) Int. Cl.: B60R 5/04, B60R 7/02

(54) **Vorrichtung zur Sicherung von Funtionseinheiten in einem Laderaum eines Kraftfahrzeuges und Deckabschnitt hierfür**

(30) Priorität: 17.12.1998 DE 19858429
(71) Anmelder: Baumeister & Ostler GmbH & Co., 73773 Aichwald (DE)
(72) Erfinder: Schlecht, Werner P., 71665 Vaihingen/Enz (DE); Walter, Herbert, 73061 Ebersbach (DE); Haspel, Klaus, 72108 Rottenburg (DE)
(74) Vertreter: Wilhelm & Dauster Patentanwälte European Patent Attorneys

(57) **Zusammenfassung**

Eine Vorrichtung zur Sicherung von Funktionseinheiten in einem Laderaum eines Kraftfahrzeuges, der einen einen etwa horizontalen Abschluß des Laderaumes bildenden Deckabschnitt (2a) aufweist, ist bekannt.

Erfindungsgemäß sind die Funktionseinheiten (17) mittels eines modularen Befestigungssystemes (18,19) an einer Unterseite des Deckabschnittes (2a) werkzeuglos und lösbar sicherbar.

Einsatz für einen mit einer schwenkbeweglichen Abdeckung versehenen Kofferraum eines Personenkraftwagens.

## Beschreibung

Die Erfindung betrifft eine Vorrichtung zur Sicherung von Funktionseinheiten in einem Laderaum eines Kraftfahrzeuges, insbesondere einem Kofferraum eines Personenkraftwagens, der einen einen etwa horizontalen Abschluß des Laderaumes bildenden Deckabschnitt aufweist, sowie einen Deckabschnitt hierfür.

Solche Deckabschnitte für Kofferräume von Personenkraftwagen sind allgemein bekannt. Die Deckabschnitte können durch feste Karosserieteile, die Teile der Karosserietragstruktur sind, gebildet sein. Sie können auch als schwenkbeweglicher Abschluß von Kofferräumen von Personenkraftwagen mit Steil- oder Fließheck gestaltet sein, wobei die Schwenkbeweglichkeit dazu dient, den Kofferraum bei einem öffnen einer Heckklappe des Steil- oder Fließheckes nach oben freizugeben. Schwenkbewegliche Deckabschnitte sind häufig als Kunststoff- oder als Verbundwerkstoffpreßteil gestaltet und in einfacher Weise aus den fahrzeugfesten Schwenklagerungen entfernbar. Die schwenkbeweglichen Deckabschnitte sind mit Hilfe von Zugmitteln an die Schwenkbewegung der Heckklappe gekoppelt, um zwangsläufig ein Aufschwenken des Deckabschnittes zu gewährleisten, sobald die Heckklappe geöffnet wird. In der abdeckenden Funktionsposition sind alle Deckabschnitte etwa horizontal ausgerichtet und bilden zumindest abschnittsweise einen oberen Abschluß des jeweiligen Kofferraumes.

Es ist auch bekannt, Staubehältnisse im Laderaum eines Kraftfahrzeuges mitzuführen. Solche Staubehältnisse können während der Fahrt des Kraftfahrzeuges im Laderaum umherrutschen, wodurch Beschädigungen der in den Staubehältnissen verstauten Gegenstände auftreten können.

Schließlich ist es auch bekannt, Funktionseinheiten wie Staunetze oder Staubehältnisse in einem Laderaum eines Kraftfahrzeuges zu sichern, indem im Bereich des Laderaumbodens entsprechende Verankerungspunkte oder Vertiefungen vorgesehen sind.

Aufgabe der Erfindung ist es, eine Vorrichtung und einen Deckabschnitt der eingangs genannten Art zu schaffen, die mit einfachen Mitteln eine zuverlässige Positionierung von Funktionseinheiten in einem Laderaum eines Kraftfahrzeuges ermöglichen.

Diese Aufgabe wird für die Vorrichtung dadurch gelöst, daß die Funktionseinheiten mittels eines modularen Befestigungssystemes an einer Unterseite des Deckabschnittes werkzeuglos und lösbar sicherbar sind. Dadurch ergibt sich eine besonders günstige und sichere Positionierbarkeit von Funktionseinheiten innerhalb des Laderaumes. Der Laderaumboden selbst muß nicht mit Verankerungspunkten oder Vertiefungen versehen sein. Das modulare Befestigungssystem gewährleistet, daß unterschiedliche Funktionseinheiten, die jeweils mit entsprechend angepaßten Befestigungselementen versehen sind, an der Unterseite des Deckabschnittes gesichert werden können. Die Sicherung der Funktionseinheiten an der Unterseite des Deckabschnittes schließt sowohl die hängende Festlegung entsprechender Funktionseinheiten als auch die Sicherung von Funktionseinheiten ein, die auf dem Laderaumboden oder an einer Seitenwand aufstehen oder anliegen. Der Deckabschnitt kann als feststehender Teil der Karosserietragstruktur, insbesondere bei Stufenhecklimousinen, als schwenkbewegliche und herausnehmbare Abdeckung bei Personenkraftwagen mit Steil- oder Schräg- bzw. Fließheck, als schwenkbewegliches Karosserieteil in Form eines Kofferraumdeckels oder als Kassettengehäuse mit ausziehbarer Laderaumabdeckung bei Steilheck-Kraftfahrzeugen gestaltet sein. Im letzteren Fall ist das modulare Befestigungssystem dem fahrzeugfest angeordneten Kassettengehäuse zugeordnet.

In Ausgestaltung der Erfindung weist das modulare Befestigungssystem an der Unterseite des Deckabschnittes einerseits und an jeder modularen Funktionseinheit andererseits korrespondierende und formschlüssig ineinandergreifende Befestigungselemente auf. Derartige Befestigungselemente können korrespondierende Profilierungen, korrespondierende Haken und Ösen, Nut/Kederelemente oder ähnliches sein.

In weiterer Ausgestaltung der Erfindung weisen die Befestigungselemente aufeinander abgestimmte Profilabschnitte auf, die in Fahrzeugquer- oder Fahrzeuglängsrichtung ausgerichtet sind. Die Profilabschnitte am Deckabschnitt einerseits und an den Funktionseinheiten andererseits sind entsprechend positiv und negativ ausgebildet, um die formschlüssige Sicherung erzielen zu können. Dabei können die Profilabschnitte auf der einen Seite, d.h. am Deckabschnitt oder an den Funktionseinheiten, nutartig und die Befestigungselemente an der anderen Seite, d.h. an den Funktionseinheiten oder an dem Deckabschnitt, entsprechend zapfen- oder kulissensteinartig gestaltet sein.

In weiterer Ausgestaltung der Erfindung weist der Deckabschnitt zwei zueinander beabstandete, in Fahrzeugquerrichtung verlaufende Hohlprofile auf, von denen wenigstens eines mit einer nutförmigen Befestigungsaufnahme in Form eines entsprechenden Profilabschnittes versehen ist. Dadurch ist es möglich, längs der Hohlprofile entsprechende Funktionseinheiten in ein- oder mehrfacher Ausführung an gewünschten Stellen zu positionieren.

In weiterer Ausgestaltung der Erfindung bilden die Hohlprofile - auf die normale Fahrtrichtung bezogen - vorder- und rückseitige Stirnkanten des Deckabschnittes und sind als Verstärkungen des Deckabschnittes gestaltet. Dadurch weisen die Hohlprofile eine Mehrfachfunktion auf, indem sie neben der Sicherung von wenigstens einer Funktionseinheit auch zur Verstärkung des Deckabschnittes dienen.

In weiterer Ausgestaltung der Erfindung nehmen die Hohlprofile zwischen sich eine zumindest im wesentlichen flächige Deckplatte auf. Diese Deckplatte kann aus energieabsorbierendem Material gestaltet sein, so daß bei einem Heckaufprall der Deckabschnitt in begrenztem Umfang bei einer entsprechenden Deformation zur Aufnahme von Aufprallenergie herangezogen werden kann.

In weiterer Ausgestaltung der Erfindung ist wenigstens ein zumindest abschnittsweise elastisch nachgiebiges Zugmittel vorgesehen, das in einem rückseitigen Hohlprofil verankert und mit einem schwenkbeweglichen Karosserieschließteil des Laderaumes verbunden ist. Dadurch weist das rückseitige Hohlprofil des Deckabschnittes eine weitere Funktion auf, in der es zur Halterung des wenigstens einen Zugmittels vorgesehen ist.

In weiterer Ausgestaltung der Erfindung sind zwei Zugmittel vorgesehen, die parallel zueinander in dem Hohlprofil verlegt und im Bereich gegenüberliegender Stirnenden des Hohlprofiles aus diesem herausgeführt sind. Dadurch wird die sich vorzugsweise in Fahrzeugquerrichtung erstreckende Länge des Hohlprofiles ergänzt und herangezogen, um die Zugmittel zu führen. Die Zugmittel können somit eine größere Länge aufweisen, so daß auch die elastische Nachgiebigkeit insgesamt erhöht werden kann.

In weiterer Ausgestaltung der Erfindung ist jedes Zugmittel im Bereich des zugeordneten Stirnendes des Hohlprofiles mittels einer Umlenkführung aus dem Hohlprofil herausgeführt, dem die Verankerungsstelle für das jeweils andere Zugmittel räumlich zugeordnet ist. Die Umlenkführung dient damit sowohl zur Führung des einen Zugmittels als auch zur Verankerung des anderen Zugmittels.

Für den Deckabschnitt wird die Aufgabe dadurch gelöst, daß an einer dem Laderaum zugewandten Unterseite des Deckabschnittes wenigstens eine Halterung für die werkzeuglose, lösbare Festlegung von modularen Funktionseinheiten angeordnet ist. Diese Halterung kann einstückig an der Unterseite des Deckabschnittes angeformt oder an der Unterseite in geeigneter Weise festgelegt sein. Die Halterung kann auch an den Seitenkanten des Deckabschnittes positioniert sein und zur Unterseite hin abragen.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in einer schematischen Seitenansicht eine Ausführungsform eines erfindungsgemäßen Deckabschnittes für einen Personenkraftwagen,
- Fig. 2: den Deckabschnitt nach Fig. 1 in perspektivischer, teilweise aufgebrochener Darstellung,
- Fig. 3: in perspektivischer Darstellung einen Ausschnitt des Deckabschnittes nach Fig. 2,
- Fig. 4: eine Schnittdarstellung des Ausschnittes nach Fig. 3 in vergrößerter Darstellung,
- Fig. 5: schematisch in einer Seitenansicht eine Ausführungsform einer erfindungsgemäßen Sicherungsvorrichtung für eine Funktionseinheit an einem Deckabschnitt,
- Fig. 6: in vergrößerter Schnittdarstellung eine erste Befestigungsstelle der Funktionseinheit nach Fig. 5,
- Fig. 7: in vergrößerter Schnittdarstellung eine weitere Befestigungsstelle der Funktionseinheit nach Fig. 5,
- Fig. 8: korrespondierende Profilabschnitte einer Halterung einer Ausführungsform eines erfindungsgemäßen Deckabschnittes,
- Fig. 9: eine weitere Ausführungsform einer erfindungsgemäßen Sicherungsvorrichtung mit dem erfindungsgemäßen Deckabschnitt nach den Fig. 2 bis 4,
- Fig. 10: eine kistenartige Funktionseinheit für eine Ausführungsform einer erfindungsgemäßen Sicherungsvorrichtung und
- Fig. 11: eine weitere Funktionseinheit mit einem gegenüber dem Befestigungssystem nach Fig. 10 modifizierten modularen Befestigungssystem.

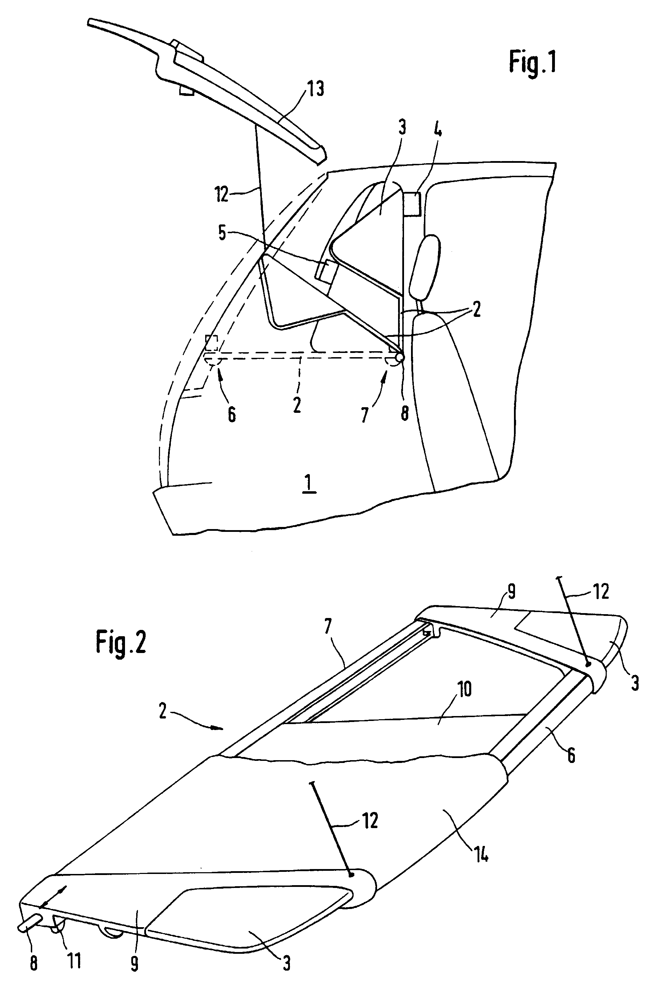

Ein Personenkraftwagen nach Fig. 1 weist ein Steil- oder Schrägheck auf und ist der Golf-Klasse zuzuordnen. Der Personenkraftwagen weist in einem Heckbereich einen als Laderaum dienenden Kofferraum 1 auf, der durch einen Deckabschnitt 2 in Form einer Abdeckung nach oben begrenzt ist. Die Abdeckung 2 ist im Bereich ihrer - in Fahrtrichtung gesehen - vorderen Stirnkante mit Hilfe von seitlich nach außen ragenden Lagerzapfen 8 (Fig. 2) in fahrzeugfesten Lagerungen um eine horizontale und in Fahrzeugquerrichtung verlaufende Schwenkachse schwenkbeweglich gelagert. Die Lagerzapfen 8 sind gegen entsprechende, nicht dargestellte Druckfedern mit Hilfe entsprechender Griffelemente 11 in Richtung des Doppelpfeiles nach innen drückbar, wodurch die Abdeckung 2 aus dem Fahrzeug entnommen werden kann. Im Bereich ihrer rückseitigen Stirnkante ist die Abdeckung 2 mit Hilfe von zwei in gewissen Grenzen elastisch nachgiebigen Zugmitteln in Form von Zugseilen 12 an einer Heckklappe 13 des Personenkraftwagens angelenkt. Die Abdeckung 2 weist zwei seitliche Flügelabschnitte 3 auf, die abklappbar gestaltet sind. Die Abklappbarkeit dieser seitlichen Flügelabschnitte 3 dient dazu, ein Hochschwenken der Abdeckung 2 zu ermöglichen, ohne daß diese mit entsprechend nach innen gezogenen D-Säulen im Rahmenbereich der Heckklappe 13 in Berührung gelangt.

Die Abdeckung 2 kann gemäß Fig. 1 auch als vertikale Laderaumabtrennung eingesetzt werden, indem sie nahezu vertikal aufgestellt wird. Als Begrenzung nach vorn ist ein Anschlag 4 vorgesehen. Zur Sicherung der vertikal aufgestellten Position der Abdeckung 2 ist im Bereich der D-Säulen wenigstens ein Rastblock 5 vorgesehen, über den der zugeordnete seitliche Flügelabschnitt 3 beim Hochklappen hinweggleitet und durch eine entsprechende elastische Vorspannung anschließend wieder nach außen schwenkt. Dadurch hintergreift der Rastblock 5 den jeweiligen Flügelabschnitt 3. Für ein erneutes Absenken der Abdeckung 2 werden die beiden Flügelabschnitte 3 in einfacher Weise von Hand nach innen gedrückt, wodurch die Abdeckung 2 an dem wenigstens einen Rastblock 5 vorbei nach unten abgesenkt werden kann.

Die Abdeckung 2 weist gemäß Fig. 2 ein - auf die normale Fahrtrichtung bezogen - vorderes, schalenartiges Hohlprofil 7 sowie ein ähnlich oder identisch gestaltetes, rückseitiges Hohlprofil 6 auf. Beide Hohlprofile 6, 7 sind als Strangpreßprofile aus einer Leichtmetallegierung, insbesondere einer Aluminiumlegierung, hergestellt und verlaufen im montierten Zustand der Abdeckung 2 horizontal und in Fahrzeugquerrichtung. Die Hohlprofile 6, 7 nehmen zwischen sich eine Deckplatte 10, die aus Sperrholz oder einem anderen geeigneten Material gestaltet sein kann, auf. Die beiden Hohlprofile 6, 7 weisen jeweils C-förmige Profilbereiche auf, in die die gegenüberliegenden Seitenkanten der Deckplatte 10 eingeschoben sind. Die Hohlprofile 6, 7 sind beim dargestellten Ausführungsbeispiel im Bereich ihrer Stirnenden mittels jeweils eines Seitenteiles 9 miteinander verbunden, so daß die Seitenteile 9 und die Hohlprofile 6, 7 einen umlaufenden Rahmen für die Deckplatte 10 bilden. Die Seitenteile 9 sind als Kunststoffteile gestaltet und weisen entsprechende Aufnahmen für die Lagerzapfen 8 auf. In gleicher Weise können die Lagerzapfen 8 in entsprechenden Aufnahmen im Bereich der Stirnenden des Hohlprofiles 7 gelagert sein.

Falls die Hohlprofile 6, 7 gemäß nicht dargestellten Ausführungsbeispielen der Erfindung nicht durch Seitenteile miteinander verbunden sind, so sind sie mittels der Deckplatte kraftübertragend miteinander verbunden, indem die Deckplatte kraft-, stoff- oder formschlüssig mit dem jeweiligen Hohlprofil 6, 7 verbunden ist.

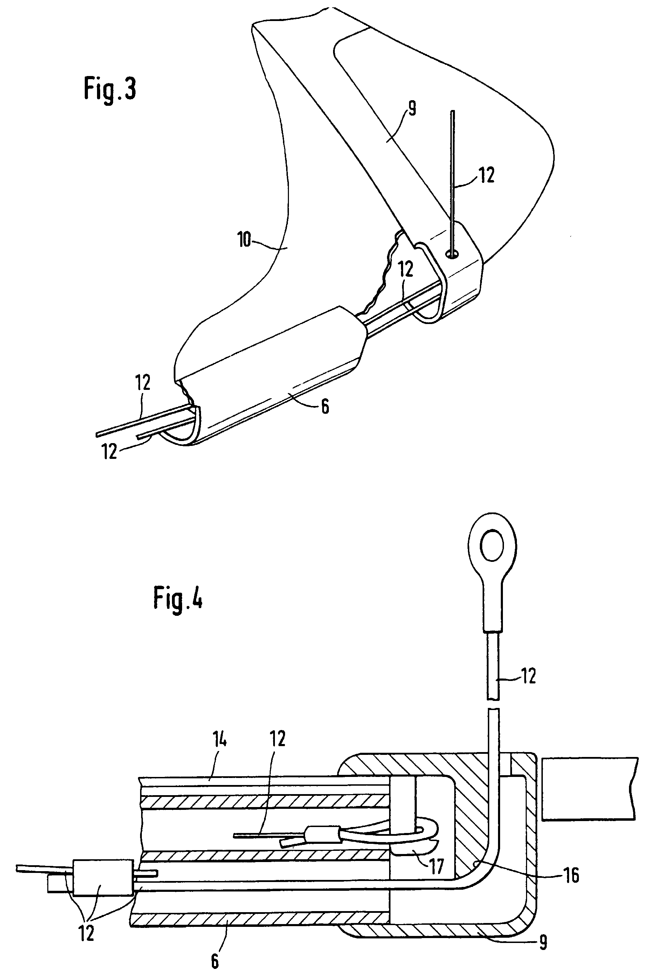

Wie anhand der Fig. 3 und 4 erkennbar ist, sind die beiden Zugseile 12, die lösbar an entsprechenden Haltepunkten der Heckklappe 13 mit Hilfe entsprechender Ösen oder anders gestalteter Halteelemente festgelegt sind, mit ihrem jeweils gegenüberliegenden Stirnende in dem rückseitigen Hohlprofil 6 verankert. Die elastische Nachgiebigkeit jedes Zugseiles 12 wird beim dargestellten Ausführungsbeispiel dadurch erzielt, daß ein unelastischer Seilabschnitt an einen elastischen Seil- oder Bandabschnitt angefügt ist (Fig. 4). In gleicher Weise kann jedoch ein entsprechendes Zugseil über seine gesamte Länge elastisch nachgiebig gestaltet sein, indem ein Seil oder Band aus elastischem Material, gegebenenfalls schlauchartig von anderem Textilmaterial ummantelt, vorgesehen wird. Jedes Zugband 12 ist im Bereich eines entsprechenden Durchtrittes des zugeordneten Seitenteiles 9 mittels einer Umlenkführung 16 in das zugehörige Stirnende des Hohlprofiles 6 eingeführt, wobei die beiden Zugseile 12 in unterschiedlichen Hohlkammern des Hohlprofiles 6 geführt sind, um gegenseitige Berührungen zu vermeiden. Jedes Zugseil 12 ist bis zum gegenüberliegenden Stirnende des Hohlprofiles 6 fortgeführt und an einem Haken 17 des gegenüberliegenden Seitenteiles 9 in unmittelbarer Nähe der gegenüberliegenen Umlenkführung 16 eingehängt. Der Haken 17 ist einstückig an dem Seitenteil 9 angeformt. Auch die Umlenkführung 16 stellt einen einstückigen Führungsabschnitt des Seitenteiles 9 dar.

Die Deckplatte 10 wie auch die beiden Hohlprofile 6, 7 sind von einem textilen Flächengebilde 14 ummantelt, dessen Materialart und -farbe an die übrige Innenraumausstattung des Personenkraftwagens angepaßt ist.

Die Abdeckung 2 weist im Bereich der beiden Hohlprofile 6, 7 an ihrer Unterseite Profilabschnitte auf, die zur Halterung von Funktionseinheiten wie Staubehältnissen, Trenngebilden zur Segmentierung des Laderaumes oder ähnlichem dienen können. Als Funktionseinheiten können auch Werkzeugkästen, Gehäuse für Warndreieck oder Verbandskasten oder auch für elektronische Geräte wie CD-Spieler oder Navigationseinheit vorgesehen sein. Allen Funktionseinheiten ist gemeinsam, daß sie über ein modulares Befestigungssystem an der Unterseite des Deckabschnittes, vorliegend der Abdeckung 2, festlegbar oder zumindest in ihrer Position sicherbar sind. Abdeckungnseitig sind hierzu die beschriebenen Profilabschnitte vorsehen. Die Funktionseinheiten weisen entsprechend abgestimmte Befestigungselemente auf, die formschlüssig mit diesen Profilabschnitten an der Unterseite der Abdeckung 2 verbindbar sind. Zur Unterstützung des modularen Befestigungssystemes können auch kraft- oder stoffschlüssige Verbindungseinheiten vorgesehen sein. Falls insbesondere Bänder an den Funktionseinheiten vorgesehen sind, die in korrespondierende Ösen an der Unterseite des Deckabschnittes einführbar sind, so kann die Fixierung der Bandschlaufen dieser Bänder über Klettverschlüsse, über anders gestaltete Haftverschlüsse, über Gurtschnallen oder ähnliches erfolgen. Anstelle von in Fahrzeugquerrichtung verlaufenden Profilabschnitten, an denen entsprechende Funktionseinheiten an beliebiger Stelle angesetzt werden können, können auch mehrere Reihen von Aufnahmepunkten an der Unterseite des Deckabschnittes vorgesehen sein, in die ein oder mehrere Sicherungselemente der Funktionseinheiten einsetzbar sind.

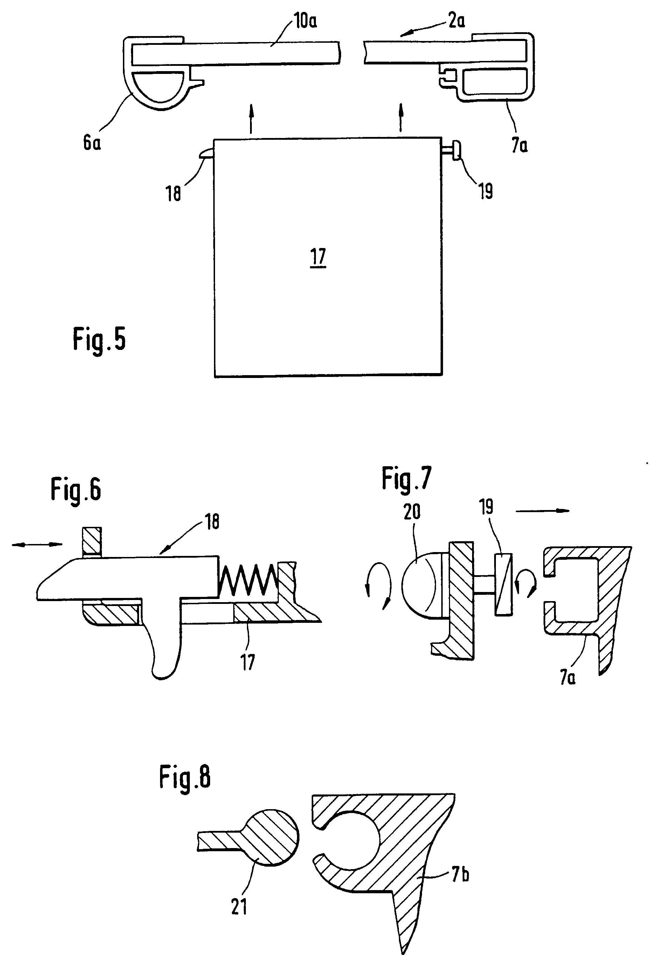

In den Fig. 5 bis 8 sind mehrere Sicherungs- oder Befestigungselemente eines entsprechenden modularen Befestigungssystemes vorgestellt. Die Funktionseinheit 17 ist lediglich schematisch kastenartig dargestellt, wobei sie je nach spezieller Ausgestaltung unterschiedliche Formen und Gestalten annehmen kann. Jede Funktionseinheit weist jedoch unabhängig von ihrer tatsächlichen Ausgestaltung Befestigungs- oder Sicherungselemente 18, 19, 21 auf, die ohne die Zuhilfenahme von Werkzeugen mit entsprechenden Profilabschnitten an der Unterseite der Abdeckung 2a verbindbar sind. Die Profilabschnitte stellen eine Halterung im Sinne der Erfindung dar. Andere Halterungen im Sinne der Erfindung können durch Lochschienen, durch Haken, durch Ösen oder andere Befestigungselemente verwirklicht sein.

Die Funktionseinheit 17 nach den Fig. 5 bis 7 ist in einen C-förmigen Profilabschnitt des vorderen Hohlprofiles 7a mit Hilfe von ein oder mehreren Kulissenzapfen 19 sicherbar, wobei jeder Kulissenzapfen 19 eine Schmalseite und eine Breitseite aufweist und drehbeweglich mittels eines entsprechenden Drehgriffes 20 an der Funktionseinheit 17 gelagert ist. Die Schmalseite ist in ihrer Breite auf die Breite des Durchtrittsschlitzes des C-förmigen Profilabschnittes des Hohlprofiles 7a abgestimmt. Die Breitseite des Kulissensteines 19 hingegen ist auf den innenliegenden Querschnitt des C-förmigen Profilabschnittes abgestimmt. Jeder Kulissenstein 19 kann somit durch entsprechendes Drehen in den Durchtrittsschlitz eingesetzt und anschließend durch eine erneute Verdrehung innerhalb des C-förmigen Profilabschnittes formschlüssig gesichert werden. Vorzugsweise ist der verriegelten Stellung eine elastische Rastfederanordnung zugeordnet, um eine Sicherung dieser Verriegelungsposition des Kulissensteines 19 in dem C-förmigen Profilabschnitt zu gewährleisten. Die Tiefe der Hohlkammer des C-förmigen Profilabschnittes wie auch die Breite des Durchtrittsschlitzes sind derart gestaltet, daß die Funktionseinheit 17 gewisse Schwenkbewegungen oder Schrägstellungen durchführen kann. Die Funktionseinheit 17 wird somit zuerst mittels des wenigstens einen Kulissensteines 19 in den C-förmigen Profilabschnitt des Hohlprofiles 7a eingehängt und anschließend auf der gegenüberliegenden Seite nach oben gedrückt, wodurch ein elastisch nachgiebiger Rastbolzen 18 auf der gegenüberliegenden Seite hinter einem als Profilabschnitt dienenden Raststeg des rückseitigen Hohlprofiles 6a einrastet. Der Rastschieber 18 ist gegen die Kraft einer Druckfeder in eine nach innen in der Funktionseinheit 17 versenkte Freigabeposition überführbar. In der unbelasteten Sperrposition, in der die Druckfeder wirksam ist, ist der Rastschieber 18 gemäß den Fig. 5 und 6 nach außen verschoben. Dem Rastschieber 18 ist ein einstückig angeformtes Griffelement zugeordnet, mittels dessen der Rastschieber 18 gegen die Druckkraft der Druckfeder von Hand nach innen bewegt werden kann, wodurch die Funktionseinheit 17 im Bereich des Raststeges des Hohlprofiles 6a wieder ausgehängt werden kann. Ein anschließendes Verdrehen des Griffknopfes 20 für die Drehung des Kulissensteines 19 in seine Freigabeposition ermöglicht das vollständige Lösen der Funktionseinheit 17 von der Abdeckung 2a.

Gemäß nicht dargestellten Ausführungsbeispielen der Erfindung ist ein feststehender Deckabschnitt eines Kofferraumes für eine Stufenhecklimousine mit einem entsprechenden modularen Befestigungssystem versehen. Dieser feststehende Deckabschnitt ist Teil der Karosserietragstruktur und somit bereits rohbauseitig in die Fahrzeugkarosserie eingebunden. Das modulare Befestigungssystem für einen solchen Deckabschnitt unterscheidet sich in Aufbau und Funktion jedoch nicht von dem modularen Befestigungssystem, wie es anhand der in den Zeichnungen dargesellten sowie vorliegend beschriebenen Ausführungsbeispiele offenbart ist, so daß auch bezüglich eines feststehenden Deckabschnittes auf die hier vorliegende Beschreibung verwiesen werden kann.

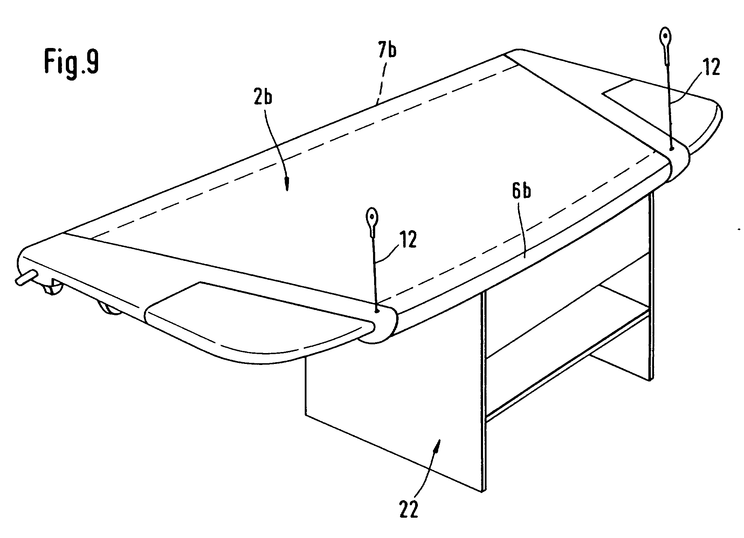

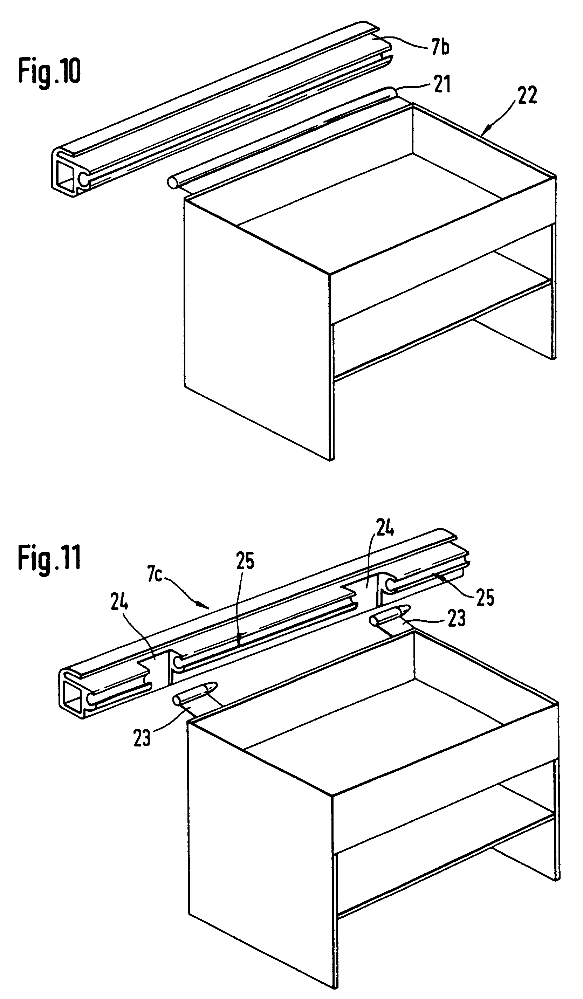

Ein modulares Befestigungssystem gemäß Fig. 8 weist eine Nut/Kederverbindung auf, indem an einem frontseitigen Hohlprofil 7b ein nutförmiger Profilabschnitt gebildet ist, in den eine kederartige Verdickung eines korrespondierenden Profilabschnittes der nicht dargestellten Funktionseinheit eingreift. Entsprechende Verbindungen sind bei den Ausführungsbeispielen nach den Fig. 9 bis 11 vorgesehen. Als Funktionseinheit ist ein kistenförmiges Staubehältnis 22 vorgesehen, an dessen Oberseite gemäß Fig. 10 ein durchgehender, kederförmiger Profilabschnitt 21 (Fig. 10) und beim Ausführungsbeispiel 11 zwei zueinander beabstandete, zapfenartige Profilabschnitte 23 vorgesehen sind.

Das kistenartige Staubehältnis 22 kann zusammenlegbar gestaltet sein.

Die Abdeckung 2b weist ein frontseitiges Hohlprofil 7b auf, das gemäß Fig. 10 mit einem über seine gesamte Länge durchgehenden nutförmigen Profilabschnitt versehen ist. Der korrespondierende, kopfartige Profilabschnitt 21 des kistenförmigen Staubehältnisses 22 kann somit von einem offenen Stirnende her axial in diesen Profilabschnitt eingeschoben werden. Falls der verdickte Profilabschnitt 21 oder auch die stegartigen Wandungen des nutförmigen Profilabschnittes elastisch nachgiebig gestaltet sind, ist es auch möglich, den Profilabschnitt 21 von der Frontseite her unter Kraftaufwand in den nutförmigen Profilabschnitt einzudrücken sowie gegebenenfalls zu einem späteren Zeitpunkt unter entsprechendem Kraftaufwand auch wieder herauszuziehen.

Beim Ausführungsbeispiel nach Fig. 11 sind in dem Hohlprofil 7c auf seiner dem kistenförmigen Staubehältnis zugewandten Frontseite zwei Aussparungen 24 vorgesehen, in die nutförmige Profilabschnitte 25 axial offen münden. Die Breite der Aussparungen 24 ist auf die Breite, d.h. die Länge in Fahrzeugquerrichtung, der zapfenartigen Profilabschnitte 23 des kistenförmigen Staubehältnisses abgestimmt. Die zapfenförmigen Profilabschnitte 23 können somit in Fahrzeuglängsrichtung in die Aussparungen 24 eingesetzt und auf Höhe der nutförmigen Profilabschnitte 25 in Fahrzeugquerrichtung - im vorliegenden Ausführungsbeispiel nach rechts - verschoben werden, wodurch sie formschlüssig in dem zugeordneten nutförmigen Profilabschnitt 25 des Hohlprofiles 7c gesichert sind. In den nutförmigen Profilabschnitten ist jeweils ein Axialanschlag vorgesehen. Die Längsachse der nutförmigen Profilabschnitte 25 wie auch des durchgehenden nutförmigen Profilabschnittes des Hohlprofiles 7b nach Fig. 10 ist entweder identisch oder zumindest in nächster Nähe zur Schwenkachse der Abdeckung 2b positioniert, so daß bei einer Schwenkbewegung der Abdeckung 2b nahezu keine resultierende Kippbewegung des kistenförmigen Staubehältnisses 22 erfolgt. Die Durchtrittsschlitze der nutförmigen Profilabschnitte wie auch die stegartigen Bereiche der kederförmigen Profilabschnitte mit den verdickten Kopfenden sind derart aufeinander abgestimmt, daß Schwenkbewegungen der Abdeckung 2b mitgemacht werden können, ohne daß Belastungen auf diese, als Scharniere dienenden, Profilabschnitte 21, 23 und damit auf das kistenförmige Staubehältnis 22 ausgeübt werden.

## Patentansprüche

1. Vorrichtung zur Sicherung von Funktionseinheiten in einem Laderaum eines Kraftfahrzeuges, insbesondere einem Kofferraum eines Personenkraftwagens, der einen einen etwa horizontalen Abschluß des Laderaumes bildenden Deckabschnitt aufweist,
**dadurch gekennzeichnet, daß**
die Funktionseinheiten (17) mittels eines modularen Befestigungssystemes (6, 7; 6a, 7a, 7b, 7c, 18, 19, 20, 21, 23, 24, 25) an einer Unterseite des Deckabschnittes (2, 2a, 2b) werkzeuglos und lösbar sicherbar sind.

2. Vorrichtung nach Anspruch 1, dadurch gekennzeichnet, daß das modulare Befestigungssystem an der Unterseite des Deckabschnittes einerseits und an jeder modularen Funktionseinheit andererseits korrespondierende und formschlüssig ineinandergreifende Befestigungselemente aufweist.

3. Vorrichtung nach Anspruch 2, dadurch gekennzeichnet, daß die Befestigungselemente aufeinander abgestimmte Profilabschnitte (7b, 21; 7c, 23, 25) aufweisen, die in Fahrzeugquer- oder Fahrzeuglängsrichtung ausgerichtet sind.

4. Vorrichtung nach Anspruch 2, dadurch gekennzeichnet, daß die Befestigungselemente unter elastischer Spannung einrastbare Rastelemente (18) aufweisen.

5. Vorrichtung nach Anspruch 2, dadurch gekennzeichnet, daß die Befestigungselemente manuell bedienbare Verriegelungseinheiten (19, 20) aufweisen.

6. Vorrichtung nach Anspruch 1, dadurch gekennzeichnet, daß der Deckabschnitt (2, 2a, 2b) zwei zueinander beabstandete, in Fahrzeugquerrichtung verlaufende Hohlprofile (6, 6a, 6b; 7, 7a, 7b, 7c) aufweist, von denen wenigstens eines mit wenigstens einer nutförmigen Befestigungsaufnahme in Form eines entsprechenden Profilabschnittes (25) versehen ist.

7. Vorrichtung nach Anspruch 6, dadurch gekennzeichnet, daß die Hohlprofile (6, 6a, 6b; 7, 7a, 7b, 7c) - auf die normale Fahrtrichtung bezogen - vorder- und rückseitige Stirnkanten des Deckabschnittes (2, 2a, 2b) bilden und als Verstärkungen des Deckabschnittes (2, 2a, 2b) gestaltet sind.

8. Vorrichtung nach Anspruch 7, dadurch gekennzeichnet, daß die Hohlprofile (6, 6a, 6b; 7, 7a, 7b) zwischen sich eine zumindest im wesentlichen flächige Deckplatte (10) aufnehmen.

9. Vorrichtung nach Anspruch 8, dadurch gekennzeichnet, daß die Hohlprofile (6, 6a, 6b; 7, 7a, 7b) stirnseitig durch zwei auf die Seitenkontur des Laderaumes (1) abgestimmte Seitenteile (9) miteinander verbunden sind.

10. Vorrichtung nach einem der vorhergehenden Ansprüche, dadurch gekennzeichnet, daß der Deckabschnitt (2, 2a, 2b) um eine horizontale Fahrzeugquerachse schwenkbeweglich gelagert ist.

11. Vorrichtung nach Anspruch 10, dadurch gekennzeichnet, daß wenigstens ein zumindest abschnittsweise elastisch nachgiebiges Zugmittel (12) vorgesehen ist, das in einem rückseitigen Hohlprofil (6) verankert und mit einem schwenkbeweglichen Karosserieschließteil (13) des Laderaumes (1) verbunden ist.

12. Vorrichtung nach Anspruch 11, dadurch gekennzeichnet, daß zwei Zugmittel (12) vorgesehen sind, die parallel zueinander in dem Hohlprofil (6) verlegt und im Bereich gegenüberliegender Stirnenden des Hohlprofiles (6) aus diesem herausgeführt sind.

13. Vorrichtung nach Anspruch 11 oder 12, dadurch gekennzeichnet, daß jedes Zugmittel (12) im Bereich des zugeordneten Stirnendes des Hohlprofiles (6) mittels einer Umlenkführung (16) aus dem Hohlprofil (6) herausgeführt ist, dem die Verankerungsstelle (17) für das jeweils andere Zugmittel (12) räumlich zugeordnet ist.

14. Vorrichtung nach einem der vorhergehenden Ansprüche, dadurch gekennzeichnet, daß ein - in Fahrtrichtung gesehen - vorderer Profilabschnitt (7b, 7c) als Scharnierleiste für die schwenkbewegliche Anbindung einer modularen Funktionseinheit (22) gestaltet ist, deren Scharnierachse koaxial oder in unmittelbarer Nachbarschaft zu der Schwenkachse des Deckabschnittes (2b) verläuft.

15. Vorrichtung nach einem der vorhergehenden Ansprüche, dadurch gekennzeichnet, daß als modulare Funktionseinheit eine kistenförmige Behältereinheit (22) vorgesehen ist, die zusammenlegbar gestaltet ist.

16. Vorrichtung nach Anspruch 14, dadurch gekennzeichnet, daß die modulare Funktionseinheit (22) mit einer zu der Scharnierleiste korrespondierenden Scharnierprofilierung (21, 23) versehen ist.

17. Vorrichtung nach Anspruch 1 oder 2, dadurch gekennzeichnet, daß der Deckabschnitt durch ein Kassettengehäuse mit ausziehbarem Flächengebilde zur Laderaumabdeckung gebildet ist, und daß entsprechende Befestigungselemente des modularen Befestigungssystemes an dem Kassettengehäuse unterhalb einer Ausziehebene des Flächengebildes positioniert sind.

18. Deckabschnitt für einen Laderaum eines Kraftfahrzeuges, insbesondere für einen Kofferraum eines Personenkraftwagens, der einen etwa horizontalen oberen Abschluß des Laderaumes bildet, dadurch gekennzeichnet, daß dem Deckabschnitt (2, 2a, 2b) eine Vorrichtung nach einem oder mehreren der vorhergehenden Ansprüche zugeordnet ist.

19. Deckabschnitt nach Anspruch 18, dadurch gekennzeichnet, daß an einer dem Laderaum zugewandten Unterseite des Deckabschnittes als Teil des modularen Befestigungssystemes der Vorrichtung nach einem oder mehreren der Ansprüche 1 bis 17 wenigstens eine Halterung für die werkzeuglose, lösbare Festlegung entsprechend modular angepaßter Funktionseinheiten angeordnet ist.
